# Europäisches Patentamt

# European Patent Office

# Office européen des brevets

(11) Publication number: **0 077 879**
**B1**

## EUROPEAN PATENT SPECIFICATION

(45) Date of publication of patent specification: **03.12.86**

(21) Application number: **82105484.8**

(22) Date of filing: **23.06.82**

(51) Int. Cl.⁴: **B 65 H 26/00, G 11 B 15/66, G 11 B 15/43**

(54) **Process and apparatus for checking the interlayer slip condition of a reel wound web.**

(30) Priority: **26.10.81 US 315113**

(43) Date of publication of application:
**04.05.83 Bulletin 83/18**

(45) Publication of the grant of the patent:
**03.12.86 Bulletin 86/49**

(84) Designated Contracting States:
**DE FR GB**

(56) References cited:
**DE-A-2 903 576**
**DE-B-1 039 251**
**FR-A-2 273 429**
**FR-A-2 350 291**
**FR-A-2 364 844**
**US-A-3 936 877**

(73) Proprietor: **International Business Machines Corporation**
**Old Orchard Road**
**Armonk, N.Y. 10504 (US)**

(72) Inventor: **Milligan, Charles Allen**
**52 Miller Lane**
**Saint David Arizona 85630 (US)**
Inventor: **Winarski, Daniel James**
**647 South Woodstock**
**Tucson Arizona 85710 (US)**

(74) Representative: **Ahlman, Bertel et al**
**IBM Svenska AB Intellectual Property Department Box 962**
**S-18 109 Lidingö (SE)**

## Description

This invention relates to webs of material wound on reels and particularly, but not exclusively, magnetic tape on reels for use in a reel-to-reel drive.

Present day tape drive systems use a reel-to-reel drive to move the magnetic tape back and forth past a transducing station. No mechanical buffering system such as a vacuum column or a dancer arm, nor capstans are required to ensure that the correct tape tension is accomplished for good recording. In a reel-to-reel system, the magnetic tape is passed directly between a supply and a take-up reel. A tension transducer senses the amount of tension in the tape as it is being reeled between the two reels and controls the motor drive that is connected to each of the reels. The reel-to-reel system operates upon the assumption that the tape wound around each of the reels is at the correct tension and that there are no loose wraps between layers of the tape which would cause the reels to falter during the winding and reeling operation via interlayer slip. A tape motion control for a reel-to-reel drive is disclosed in U.S. 4 125 881, DE—2814376, FR—2391528 and GB—1588908.

Severe environmental changes can cause the tape wound on a reel to expand and contract thereby changing the tension in the reel by causing loose wraps. When the drive attempts to rotate these loose wraps on the reel hub, interlayer slip results. Since it is unknown which reels suffered through an environmental disturbance, heretofore each reel would have to be assumed to contain loose wraps or wait until a misread occurs and then assume that the error was the cause of a loss of tension, velocity or position and thereby require a repeat of the operation.

The German patent DE 1 039 251 discloses manual means for correcting the interlayer slip condition of a web material wound on a reel. There are however no means indicating whether the slip condition is acceptable or not.

It is, therefore, an object of the present invention to provide a process and apparatus for testing for the condition of the tape upon a reel when first introduced into a tape drive.

Prior to the present invention, either all tapes, or all tapes suspected of having undergone an environmental change, had their tension refreshed by placing the reel of tape in a drive and completely rereeling the tape. The drive, of course must be set up to control the tension of the tape as it is being rereeled. In most instances since it is unknown what environmental situations occurred in the storage of the tape reels, all reels underwent a refresh operation.

It is, therefore, another object of the present invention to provide a process and apparatus for controlling the apparatus that tests for the tape tension condition of a reel of tape and control the tape drive such that only those tape reels that show an interlayer slip condition are rereeled to refresh the tension of the tape.

The present invention relates to a process for checking the interlayer slip condition of a web of material wound on a reel comprising the steps of connecting the reel containing the web to a means for rotating the reel, holding the free end of the web against movement due to winding rotation of the reel, attempting to rotate the reel in a winding direction against the held free end of the web, sensing any rotation of the reel while attempting to rotate the reel.

The process of the present invention is characterized by the steps of generating signals indicative of the amount of reel rotation, using the generated signals to perform a loose-tape wrap check operation and in response to such a check operation indicating that more than a predetermined amount of reel rotation has occurred, rereeling the web.

The present invention also relates to an apparatus for checking the interlayer slip condition of a web of material wound on a supply reel, comprising restraining means for holding the free end of the web.

The apparatus of the present invention is characterized by drive means for reversibly rotating the reel, sensing means connected to the drive means and control means connected to the drive means and to the sensing means to activate the drive means to rotate the supply reel to tighten the web against the restraining means and, responsive to a signal generated from the sensing means indicating more than a predetermined amount of such rotation to rereel the web for a refresh of the tension condition of the web to overcome interlayer slip.

The prior art portions of the attached independent claims 1 and 3 are based on the disclosure of DE 1 039 251.

The invention provides an enhanced tape drive apparatus and a method for controlling said apparatus.

The invention overcomes the condition of a reel of tape by performing a test procedure prior to using the tape in a recording or reproducing procedure in a reel-to-reel tape drive.

The invention provides apparatus that tests the condition of a reel of tape for an interlayer slip tendency by applying a reverse drive to the reel of tape against a held end of the reel of tape and sensing any motion of the reel to identify the condition of the tape.

The scope of this invention is defined by the appended claims; and how it can be carried into effect is hereinafter particularly described with reference to the accompanying drawings, in which:

FIG. 1 is a pictorial representation of a tape drive and control for performing a process according to the present invention;

FIG. 2 is a flow chart showing the general process of the invention using the tape drive and control of Fig. 1; and

FIG. 3 is a flow chart showing the process of the invention giving more detail of the process according to Fig. 2.

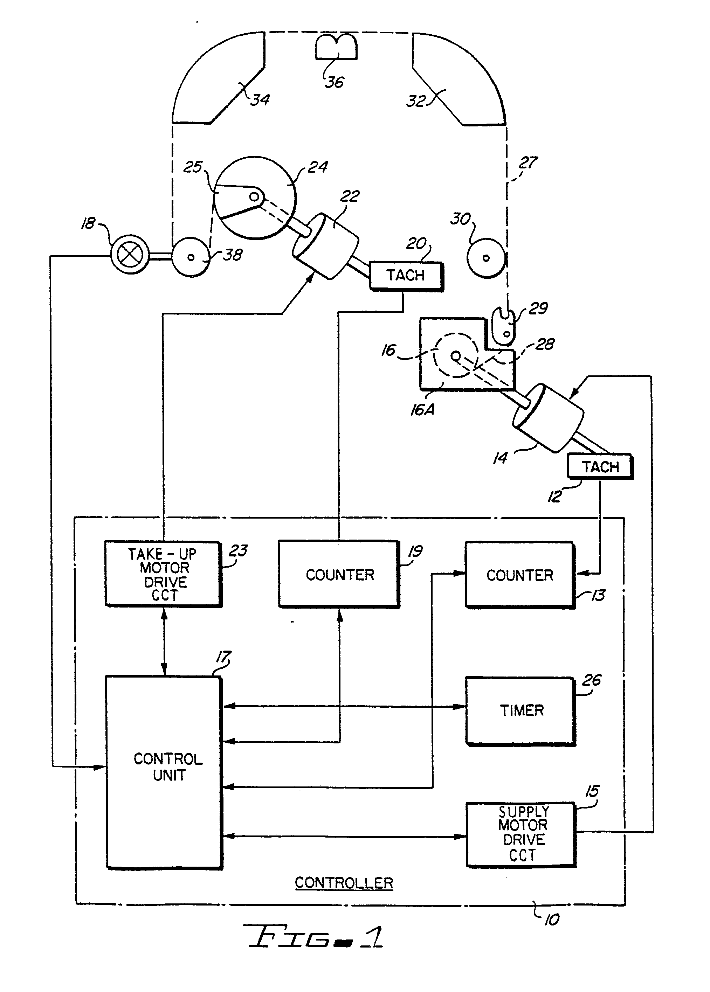

Because Figure 1 is a highly diagrammatic pictorial representation of a reel-to-reel tape drive in accordance with the present invention, reference may be made to US 4,125,881, FR—2,391,528, DE—2,814,376 and GB—1,588,908 for a more complete description of a control circuit usable for a reel-to-reel tape drive. Only such details as are required for an understanding of the present invention are described herein.

The invention will be described in relation to a reel-to-reel type magnetic tape drive such as is disclosed in patent application No. 81104238.1, (EP—42989). The tape drive includes a reversible supply reel motor 14 arranged to drive through a clutch drive (not shown) a supply reel 16 located within a replaceable single-reel cartridge 16A. Magnetic tape 28 is wound on the supply reel and the leading end is attached to a leader block 29 which, by engagement with the cartridge 16A, restrains the leading end of the tape from entering the cartridge during reverse rotation of the supply reel 16.

Automatic threading apparatus (not shown) enables the leader block 29 to be engaged and drawn along a path to unwind tape 28 from the supply reel and lead it along path 27 to a take-up reel 24. The path 27 leads past an idler bearing 30, an air bearing tape guide 32, a magnetic head 36, an air bearing tape guide 34 and an air bearing guide 38 connected to a tension arm transducer 18. The leader block 29 is accommodated in a cutout 25 in the take-up reel 24 when the leading end of the tape 28 reaches the reel. The take-up reel 24 is driven by a reversible take-up reel motor 22. Tachometers 12 and 20 are connected to the motors 14 and 22, respectively, to provide count pulse signals indicative of the amounts and directions of rotation and the rotational positions of the motors and reels.

The tachometer 12 directs count pulse signals to a counter 13 within a controller 10. The output of the counter 13 is directed to a control unit 17. The count information from the supply reel tachometer 12 is used by the control unit 17 to perform the loose-tape wrap check operation according to the present invention. The control unit 17 also provides the control for keeping the required tension in the tape and thus the output from the tension arm transducer 18 is also directed to the control unit 17. Another input to the control unit 17 is via a counter 19 that accepts count pulse signals from the take-up reel tachometer 20. The supply reel motor 14 is driven by a motor drive circuit 15 under control of the control unit 17 and the take-up reel motor 22 is driven by a motor drive circuit 23 under control unit 17. A timer 26 is included in the controller 10 to control the application by the motor drive circuit 15 of power to the motor 14. The timer 26 is controlled by the control unit 17 in accordance with the present invention as will be discussed later. For the purposes of the present invention, the controller 10, after the entry of a cartridge 16A into the drive and loading of the supply reel 16 onto the clutch drive (not shown), activates the motor 14 through control unit 17 and the motor drive circuit 15 in a reverse or reeling direction first to take up any slack in the tape 28 on the supply reel against restraining means in the form of the leader block 29, and then to apply a reverse higher current drive to the motor 14 for a period of time determined by timer 26, while checking the output of the tachometer 12 to sense any reverse rotation of the supply reel 16 allowed by the tape 28 held by the leader block 29. If the control unit 17 senses fewer than a preset number of count pulse signals from the tachometer 12 as stored in the counter 13, this means that the tape 28 on the supply reel 16 has not changed characteristics and is wrapped in a tight enough fashion to permit good operation of the reel-to-reel drive. If however, the tachometer 12 sends out more than the preset number of count pulse signals, this signifies that the tape 28 on the supply reel 16 was not tight enough and the supply reel actually made a reverse motion against the end of the tape held by the leader block 29. In this case, the control unit 17 will direct a threading operation which will pull the leader block 29 and the tape 28 through the tape path 27 onto the take-up reel 24. The take-up reel motor 22 will be activated through motor drive circuit 23 to wind the tape 28 onto the reel 24 and unwind all the tape 28 from the supply reel 16 under control of the control unit 17. At the same time the supply reel motor 14 is activated through motor drive circuit 15 to control the unwinding of the tape from the reel 16. When an end of tape is located by the control unit 17 in the controller 10 through a count of the number of turns that the tachometer 20 has sensed, the current to both motors 14 and 22 is reversed to unwind the tape 28 from the take-up reel 24 and wind it back on the supply reel 16. The tension of the wind of the tape 28 onto the supply reel 16 is controlled by the tension arm transducer 18 which controls the speed and rotation of the motors 14 and 22 through the control unit 17 of the controller 10. Thus, the tape 28 on the supply reel 16 is refreshed and is now ready for utilization in the reel-to-reel drive to either read or write magnetic transition information from or onto the magnetic tape 28.

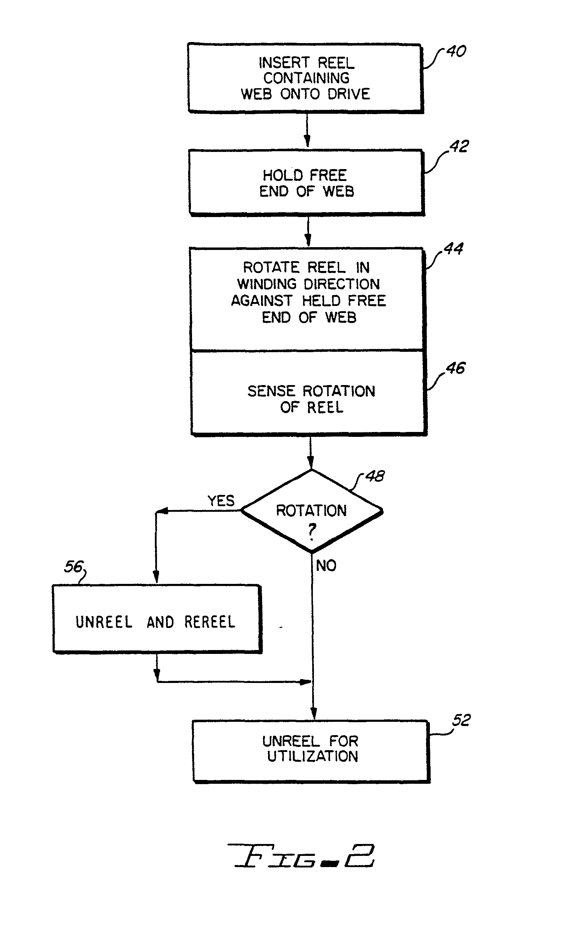

In simple terms, the procedure follows the very generalized flow chart shown in Figure 2. The first step 40 in the procedure according to the present invention is to insert the supply reel 16 containing a wound web in the form of magnetic tape 28 into the tape drive. The next step 42 in the procedure is to hold the free end of the tape 28 against a reverse rotation by means of the leader block 29 engaging the cartridge 16A. The next step 44 in the procedure is to activate the motor 14 by the controller 10 to rotate the supply reel 16 in the reverse or winding direction against the held free end of the web. Simultaneously, the step 46 is to sense any reverse rotation of the supply reel 16 by means of the tachometer 12, the counter 13 and the control unit 17. The next step 48 is to decide whether more than a predetermined reverse rotation has occurred. If less than the predetermined reverse rotation has occurred, the next step 52 is for the controller 10 to activate the threading operation and the unreeling of the magnetic tape 28 from the supply reel 16 through the tape path 27 onto the take-up reel 24 for utilization, which is the sensing or writing of the magnetic transitions from or onto the magnetic tape by the magnetic head 36.

If more than a predetermined number of pulse signals is emitted by tachometer 12 and sensed by the controller 10, then the next step 56 is to unreel and rereel the web because rotation has been sensed. In this step, the controller 10 activates the threading of the leader block 29 and the magnetic tape 28 along the tape path 27 onto the take-up reel 24. The motors 14 and 22 are activated to completely unreel the magnetic tape 28 from the supply reel 16 onto the take-up reel 24. When the end of tape (EOT) is located, the controller 10 then re-activates the motor 14 and the motor 22 to perform a rereeling of the magnetic tape onto the supply reel 16 under the correct amount of tension as determined by the tension arm transducer 18. After the magnetic tape 28 is completely returned to the supply reel 18, the magnetic tape is again unreeled for utilization in the tape drive in step 52.

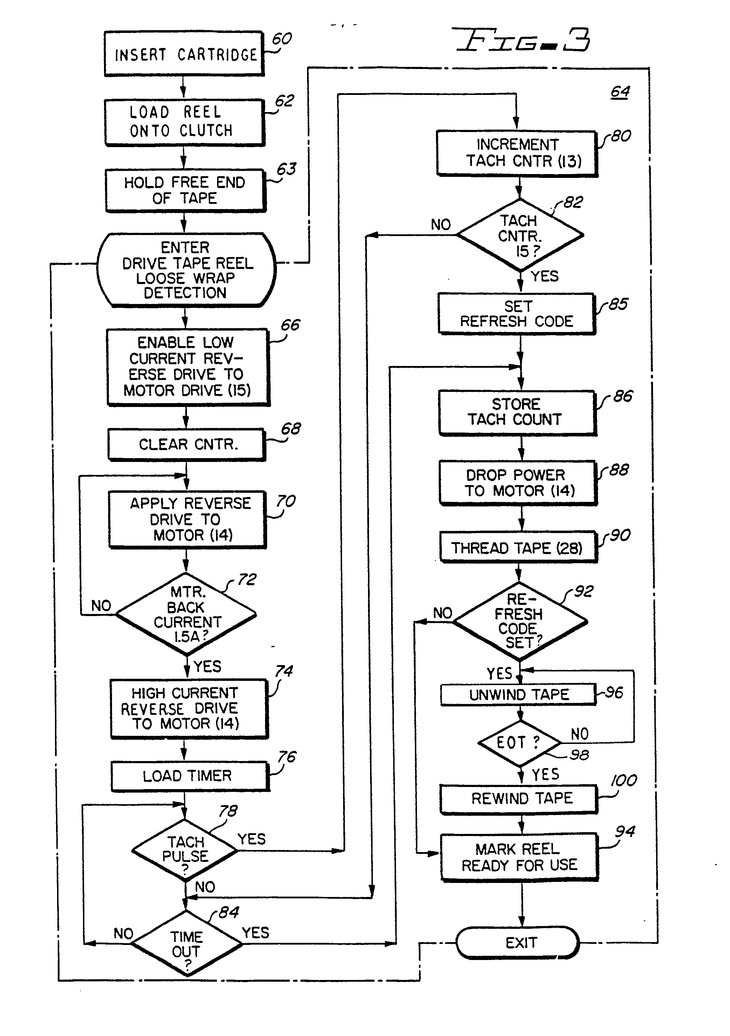

The preferred procedural steps are shown in more detail in Figure 3. The first step 60 is to insert the cartridge 16A with the supply reel 16 into the tape drive. The next step 62 is to load the supply reel onto the clutch drive (not shown). The free end of the tape 28 is held by the leader block 29 as indicated in block 63. Then the generalized procedure for the detection and possible correction of the loose wrap of the supply reel 16 is begun. The loose wrap detection is performed on every tape reel entered into the tape drive. The procedure is performed to identify any reels of magnetic tape that have undergone environmental changes that could cause the wraps of tape to unloosen. If a loose tape wrap is detected, then a refresh operation is required. The lack of integrity of the wraps of the tape on the supply reel could cause an uneven feeding of the tape past the magnetic transducer because in a reel-to-reel tape drive, no capstans are used specifically to control the motion of the tape past the transducer. This problem is solved in this embodiment of the present invention by the checking procedures shown within the dotted section identified by reference numeral 64.

The first part of the process is to remove any slack from the tape 28 that may exist between the first layers of the tape and the leader block 29. This is begun in step 66 in which a low voltage reverse drive to the supply reel motor 14 is enabled by the controller 10 through the motor drive circuit 15 and the control unit 17. The next step 68 is to clear the counter 13 in the controller 10. The counter 13 is cleared in preparation for the actual loose-wrap detection operation. The next step 70 is to apply the low voltage reverse drive to the motor 14 so that the supply reel 16 is driven backwards at a low velocity. The low voltage is to ensure that no undue strain is placed against the tape 28 and the leader block 29 and to merely take up slack without causing a slip between the layers of tape on the supply reel. In step 72, the control unit 17 senses the motor back current for an amplitude that would signify that all the slack in the tape has been taken up. For the motor used in the preferred embodiment, a current of 1.5 amps is used for an indication that all the slack in the tape has been removed. Until such a motor back current is sensed, step 70 continues.

When the motor back current reaches 1.5 amps, a high current reverse drive is applied to the motor 14 by the motor drive circuit 15 under control of the control unit 17 in step 74. At the same time, the timer 26 is loaded for a specific time-out in step 76 to limit the duration of application of this high current drive to the motor 14. In step 78, count pulse signals output by the tachometer 12 are awaited and if sensed used to increment the counter 13 in step 80. In the next step 82, a decision is made whether the number of tachometer pulses in the counter is fifteen or more. That number of tachometer pulses has been taken arbitrarily according to a set number which has been experimentally determined to be the best output count to check whether the tape on the supply reel needs a refresh operation. If the number of tachometer pulses is less than fifteen, a check is made in the step 84 whether the time limit has already passed for applying the high current reverse drive to the motor 14. If the time limit has not been passed, as determined by the timer 26, and high current continues to be applied to the motor 14, the check in step 78 for pulses output from the tachometer 12 continues and the tachometer counter 13 is incremented accordingly. If step 82 senses that the tachometer 12 has emitted fifteen count pulses as counted by the counter 13 before time-out of the timer 26 has occurred, a refresh code is set in control unit 17 in step 85. The setting of a refresh code indicates that a refresh is required because the detection system has detected that the tape is too loosely wrapped for proper reel-to-reel drive operation. If the count in the tachometer counter never reaches a count of fifteen and the period of time loaded into the timer 76 has passed, as determined in step 84 after a time-out by the timer 26, step 86 follows, in which the tachometer count in counter 13 is sorted by the control unit 17. This count of the tachometer pulses is not used, as the tachometer counter 13 counted less than fifteen pulses. The motor drive circuit 15 ceases to apply the high current reverse drive to the motor 14 in step 88 and the tape 28 is threaded to the take-up reel 24 in step 90. A check is made in step 92 whether the refresh code has been set, and because it has not, the reel of tape is in good condition for sensing magnetic transitions and is marked ready for use in step 94. The drive then utilizes the magnetic tape in the usual manner and the procedure is exited when the unreeling of the tape continues while the magnetic transitions are sensed by the magnetic head 36.

If the refresh code has been set in step 85, the tachometer count from counter 13 is stored in the control unit 17 in step 86 and the reverse rotation of the motor 14 is stopped in step 88. In the next step 90, the tape is threaded from the supply reel 16 onto the take-up reel 24. A check is made, in step 92, whether the refresh code has been set. As the refresh code has been set indicating that the layers of tape are too loosely wound, the next step 96 is to unwind all the tape 28 from the supply reel 16 and wind it onto the take-up reel 24. When the end of the tape (EOT) is located in step 98, unwinding of the tape from the supply reel 16 is stopped and the tape is then rewound from the take-up reel 24 back onto the supply reel 16 in step 100. The controller 10 controls the motors 14 and 22 according to the tension sensed by the tension arm transducer 18. The leader block 29 remains in the take-up reel 24. The reel of tape is now ready for utilization by the tape drive and the reel is marked ready for use in step 94, and the procedure is exited as described above.

The invention is applicable to reel-to-reel type magnetic drives having tape paths of different type to that described.

The invention is also applicable to a two reel cartridge whichever reel is full of tape being the supply reel, and the other empty reel being the take-up reel 24.

If the head 36 and its associated circuitry were adapted to read and/or write in either direction, then a refresh reeling operation as in step 56 or in steps 96, 98 and 100 could be replaced by a single reeling from the supply reel to the take-up reel. The utilization unreeling step 52 would then be from the take-up reel to the supply reel.

Many different types of tachometer and tension transducer may be used. A reel of tape without a cartridge could be substituted for the cartridge and supply reel with a clamp acting as a restraining means to hold the free end of the tape.

**Claims**

1. A process for checking the interlayer slip condition of a web (28) of material wound on a reel (16), comprising the steps of connecting the reel containing the web to a means (14) for rotating the reel, holding the free end of the web against movement due to winding rotation of the reel, attempting to rotate the reel in a winding direction against the held free end of the web, sensing any rotation of the reel while attempting to rotate the reel, characterized by generating signals indicative of the amount of reel rotation, using the generated signals to perform a loose-tape wrap check operation and in response to such a check operation indicating that more than a predetermined amount of reel rotation has occurred, rereeling the web.

2. A process according to claim 1, in which the step of rereeling the web includes the steps of unwinding the web from the reel (16), winding the unreeled web onto a take-up reel (24), and rewinding the web onto the reel (16), while holding the web under tension.

3. Apparatus for checking the interlayer slip condition of a web (28) of material wound on a supply reel (16), comprising restraining means (29) for holding the free end of the web, characterized by drive means (14) for reversibly rotating the reel, sensing means (12) connected to the drive means (14) and control means (10) connected to the drive means and to the sensing means to activate the drive means to rotate the supply reel to tighten the web against the restraining means and, responsive to a signal generated from the sensing means indicating more than a predetermined amount of such rotation, to rereel the web for a refresh of the tension condition of the web to overcome interlayer slip.

4. Apparatus according to claim 3 in which the sensing means is a tachometer generating pulses indicative of its rotation.

5. Apparatus according to claim 4, in which the control means includes a counter (13) for counting said tachometer generated pulses.

6. Apparatus according to claim 3, 4 or 5, including a take-up reel (24) and reversible drive means (22) therefor, in which the control means (10), to rereel the web, controls both reel drive means.

7. Apparatus according to any preceding claim, in which the web of material is a magnetic tape on a reel within a single reel cartridge and the restraining means is a leader block used to thread the magentic tape to the take-up reel.

8. Apparatus according to claim 3, 4, 5, 6 or 7, in which the control means is arranged to activate the drive means (14) to rotate the reel in a winding direction under a low current drive to remove any slack between the first layer of magnetic tape and the leader block and then to rotate the reel in a winding direction under a higher current to check for interlayer slip by checking rotation of the supply reel against the held end of the magnetic tape by the leader block.

**Revendications**

1. Procédé pour vérifier le glissement entre les spires d'une bande (28) enroulée sur une bobine (16), comprenant les étapes consistant à accoupler la bobine contenant la bande à un dispositif (14) destiné à la faire tourner, à maintenir l'extrémité libre de la bande pour l'empêcher d'être entraînée du fait de la rotation d'enroulement de la bobine, à essayer de faire tourner la bobine dans le sens d'enroulement, à contresens de l'extrémité libre maintenue de la bande, à détecter toute rotation de la bobine alors qu'on essaye de la faire tourner, ledit procédé étant caractérisé par la génération de signaux représentatifs de l'importance de la rotation de la bobine, par l'utilisation des signaux engendrés pour effectuer une opération de vérification d'enroulement lâche de la bande et, si cette opération de vérification indique que la rotation de la bobine est supérieure à une valeur prédéterminée, par le réenroulement de la bobine.

2. Procédé selon la revendication 1, caractérisé en ce que l'étape de réenroulement de la bande inclut les étapes consistant à dérouler la bande de sur la bobine (16), à enrouler la bande déroulée sur une bobine réceptrice (24) et à réenrouler la bande sur la bobine (16) tout en maintenant tendue la bande.

3. Appareil pour vérifier le glissement entre les spires d'une bande (28), enroulée sur une bobine débitrice (16), comprenant un dispositif de retenue (29) pour maintenir l'extrémité libre de la bande, caractérisé en ce qu'il comprend un dispositif d'entraînement (14) pour faire tourner la bobine dans les deux sens, un dispositif de détection (12) connecté au dispositif d'entraînement (14) et un dispositif de commande (10) connecté au dispositif d'entraînement et au dispositif de détection pour activer le dispositif d'entraînement de façon à faire tourner la bobine débitrice afin de tendre la bande à l'encontre du dispositif de retenue et, en réponse à un signal engendré par le dispositif de détection, indiquant une rotation supérieure à un taux de rotation prédéterminé, pour réenrouler la bande afin d'en rafraîchir la tension et de supprimer le glissement entre les spires.

4. Appareil selon la revendication 3, caractérisé en ce que le dispositif de détection est un tachymètre qui engendre des impulsions indiquant sa rotation.

5. Appareil selon la revendication 4, caractérisé en ce que le dispositif de commande inclut un compteur (13) pour compter lesdites impulsions engendrées par le tachymètre.

6. Appareil selon la revendication 3, 4 ou 5, caractérisé en qu'il comprend une bobine réceptrice (24) et un dispositif d'entraînement réversible (22) associé à cette dernière, dans lequel le dispositif de commande (10) commande les deux dispositifs d'entraînement de bobine pour réenrouler la bande.

7. Appareil selon l'une quelconque des revendications précédentes, caractérisé en ce que la bande est une bande magnétique enroulée sur une bobine à l'intérieur d'une cartouche à une seule bobine, et le dispositif de retenue est un arrêtoir utilisé pour acheminer la bande magnétique jusqu'à la bobine réceptrice.

8. Appareil selon la revendication 3, 4, 5, 6 ou 7, caractérisé en ce que le dispositif de commande est agencé de façon à activer le dispositif d'entraînement (14) de façon à faire tourner la bobine dans un sens d'enroulement, avec un petit courant d'entraînement afin de résorber tout le mou éventuel entre la première couche de bande magnétique et l'arrêtoir, puis à faire tourner la bobine dans un sens d'enroulement, avec un courant important, pour vérifier le glissement entre les spires en évaluant la rotation de la bobine débitrice à contresens de l'extrémité de la bande magnétique maintenue par l'arrêtoir.

## Patentansprüche

1. Verfahren zur Prüfung des Lagenschlupfzustandes eines auf eine Spule (16) gewickelten Bandes (28), mit den Verfahrensschritten des Verbindens der das Band enthaltenden Spule mit Mitteln (14) zur Drehung der Spule, des Festhaltens des freien Endes des Bandes gegen eine auf die Wickeldrehung der Spule zurückzuführende Bewegung, des Versuchens, die Spule in eine Wickelrichtung gegen das festgehaltene freie Ende des Bandes zu drehen, des Abfühlens einer Drehung des Spule während des Versuchs, die Spule zu drehen, gekennzeichnet durch das das Erzeugen von Signalen, die das Ausmaß der Spulendrehung angeben, das Verwenden der erzeugten Signale zur Durchführung eines Prüfvorgangs hinsichtlich einer schlaffen Bandwicklung, und, ansprechend darauf, daß ein solcher Prüfvorgang anzeigt, daß ein größeres als ein bestimmtes Ausmaß an Drehung stattgefunden hat, das Umspulen des Bandes.

2. Verfahren nach Anspruch 1, bei welchem der Verfahrensschritt des Umspulens des Bandes die Verfahrensschritte des Abwickelns des Bandes von der Spule (16), des Aufwickelns des abgespulten Bandes auf eine Aufwickelspule (24) und des Rückwickelns des Bandes auf die Spule (16), während das Band unter Spannung gehalten wird, enthält.

3. Vorrichtung zur Prüfung des Lagenschlupfzustandes eines auf eine Abwickelspule (16) gewickelten Bandes (28), mit Rückhaltemitteln (29) zum Festhalten des freien Endes der Bahn, gekennzeichnet durch Antriebsmittel (14) für eine umkehrbare Drehung der Spule, mit den Antriebsmitteln (14) verbundene Abfühlmittel (12) und mit den Antriebsmitteln und den Abfühlmitteln verbundene Steuermittel (10) zur Aktivierung der Antriebsmittel hinsichtlich einer Drehung der Abwickelspule zur Straffung des Bandes gegen die Rückhaltemittel und, ansprechend auf ein von den Abfühlmitteln erzeugtes Signal, welches ein größeres als ein bestimmtes Ausmaß einer solchen Drehung angibt, einer Umspulung des Bandes für eien Auffrischung des Spannungszustands des Bandes zur Überwindung des Lagenschlupfes.

4. Vorrichtung nach Anspruch 3, bei welcher die Abfühlmittel ein Drehzahlmesser sind, welcher seine Drehung angebende Impulse erzeugt.

5. Vorrichtung nach Anspruch 4, bei welcher die Steuermittel einen Zähler (13) zur Zählung der durch den Drehzahlmesser erseugten Impulse enthalten.

6. Vorrichtung nach Anspruch 3, 4 oder 5, welche eine Aufwickelspule (24) und umkehrbare Antriebsmittel (22) für diese enthält, bei welcher die Steuermittel (10) für eine Umspulung des Bandes beide Spulenantriebsmittel steuern.

7. Vorrichtung nach irgendeinem vorstehenden Anspruch, bei welcher das Band ein Magnetband auf einer Spule in einer Einspulenkassette ist und die Rückhaltemittel ein zur Fädelung des Magnetbandes zur Aufwickelspule verwendeter Führungsblock sind.

8. Vorrichtung nach Anspruch 3, 4, 5, 6 oder 7, bei welcher die Steuermittel so eingerichtet sind, daß sie die Antriebsmittel (14) zu einer Drehung der Spule in einer Wickelrichtung mit einem niedrigen Antriebsstrom zur Beseitigung einer Lose zwischen der ersten Lage des Magnetbandes und dem Führungsblock und dann zu einer Drehung der Spule in einer Wicklungsrichtung bei einem höheren Strom zu einer Prüfung hinsichtlich des Lagenschlupfes durch Prüfung der Drehung der Abwickelspule gegen das durch den Führungsblock festgehaltene Ende des Magnetbandes aktivieren.

$$\boxed{\textit{FIG-1}}$$

$\mathcal{F}IG\!-\!2$

*Fig-3*